(19) 

Europäisches
Patentamt
European
Patent Office
Office européen
des brevets

(11) **EP 1 956 718 A1**

(12) **EUROPEAN PATENT APPLICATION**

(43) Date of publication:
**13.08.2008 Bulletin 2008/33**

(51) Int Cl.:
*H04B 1/10* (2006.01)       *H04L 25/03* (2006.01)
*H04L 1/00* (2006.01)

(21) Application number: **07102086.1**

(22) Date of filing: **09.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Research In Motion Limited**
**Waterloo, Ontario N2L 3W8 (CA)**

(72) Inventors:
• **Wu, Huan**
  **Kanata, Ontario, K2M 2W8 (CA)**

• **Simmons, Sean**
  **Waterloo, Ontario N2T 1E7 (CA)**

(74) Representative: **Roberts, Gwilym Vaughan et al**
**Kilburn & Strode**
**20 Red Lion Street**
**London WC1R 4PJ (GB)**

Remarks:
Amended claims in accordance with Rule 137(2) EPC.

(54) **Apparatus, and associated method, for filtering a receive signal by adaptive operation of an input noise whitening filter**

(57)     Apparatus, and an associated method, for the receive part of a receiving station, such as a mobile station or other transceiver of a cellular communication system. Selection is made of filter characteristics to be exhibited by an adaptive, input noise whitening filter. A noise estimator estimates a noise component of a noise sequence. An autocorrelation estimator estimates the noise-component autocorrelation. A determination is made as to whether the autocorrelation exceeds a threshold. If so, filter characteristics are selected to cause the input noise whitening filter to operate to inject whitening noise into the received sequence.

112

DETECT RECEIVE SEQUENCE ~114

FORM NOISE SAMPLE ESTIMATE ~116

FORM AUTOCORRELATION OF THE NOISE SAMPLE ESTIMATE ~118

GREATER THAN THRESHOLD? 122

N → SELECT UNITARY FILTER CHARACTERISTIC ~126

Y → SELECT FILTER CHARACTERISTIC TO INJECT NOISE WHITENING 124

OPERATE INWF IN CONFORMITY WITH FILTER CHARACTERISTIC ~128

**FIG. 3**

EP 1 956 718 A1

## Description

The present invention relates generally to a manner for a receiving station, such as the receive part of a cellular-system transceiver, by which to suppress interference included in a receive signal. More particularly, the present invention relates to apparatus, and an associated method, by which to operate an adaptive input noise whitening filter of the receiving station. The filter is caused to be powered, or otherwise operated, to whiten interference when the receive signal contains a significant interference component and otherwise not to inject whitening.

A threshold is used to select whether to operate the input noise whitening filter. Through appropriate setting of the threshold, the filter is caused to be operable when the whitening facilitates information recovery of received data and to be operable not to inject whitening when its injection is not needed or helpful to the information recovery.

## Background of the Invention

Digital cellular, and other radio, communication systems are deployed to encompass significant portions of the populated areas of the world. For many, access to such a communication system is a practical necessity. Two-way communications are generally provided in a cellular communication system to effectuate both voice communication services and data communication services.

A cellular communication system makes relatively efficient use of its allocated bandwidth, i.e., the portion of the electromagnetic spectrum allocated to the communication system for communications between the network infrastructure and a mobile station used pursuant to effectuation of a communication service. The geographical area encompassed by the cellular communication system is divided into parts referred to as cells, each defined by a base transceiver station. Relatively low-power signals are generated to effectuate communications between a base transceiver station and a mobile station positioned within the associated cell. And, cell-reuse schemes are utilized in which the same channels are re-used in different ones of the cells according to a cell re-use pattern or scheme. While channel allocations made pursuant to a cell re-use scheme are made to limit interference between concurrently-generated signals in the different cells, interference, sometimes occurs. Interference includes both co-channel interference and adjacent channel interference. If the interference is significant and it is not suppressed, or otherwise compensated for, the interference degrades communication performance of the receiving station.

Co-channel interference refers to interference caused by concurrently-generated signals sent in another cell that uses, i.e., "re-uses", the same channels as those channels used in the cell in which the interfering signals are detected. And adjacent-channel interference refers to interference caused by concurrently-generated signal sent, typically, in another, e.g., adjacent, cell that uses different channels. But, the signal strengths of the signals sent in such other cells is so great as to cause aliasing that results in interference.

Various mechanisms are used, and others proposed, by which to compensate for interference included in a receive signal received at a receiving station. For instance, use of an adaptive noise whitening filter (INWF) has been proposed to suppress interference. The INWF is used together with a receive filter. The receiver filter has a passband wide enough to pass some adjacent channel interference and the INWF operates to whiten the interference. While a narrow receiver filter would reject greater amounts of adjacent channel interference, its narrowing worsens equalizer operation at the receiving station to compensate for co-channel interference.

In short, the use of the adaptive input noise whitening filter in a manner best to suppress adjacent channel interference competes with the ability of other receive-station elements to suppress, or compensate for co-channel interference. There is a need therefore, to provide an improved manner, at a receiving station, to compensate for, or to suppress, interference forming part of a receive signal received at a receiving station.

It is in light of this background information related to receiving stations operable in a radio, or other, communication system that the significant improvements of the present invention have evolved.

## Brief Description of the Drawings

Figure 1 illustrates a functional block diagram of a radio communication system in which an embodiment of the present invention is operable.

Figure 2 illustrates a functional block diagram of an adaptive, input noise whitening filter assembly of an embodiment of the present invention.

Figure 3 illustrates a process diagram representing the process of operation of an embodiment of the present invention.

## Detailed Description

The present invention, accordingly, advantageously provides apparatus, and an associated method, for a receiving station, such as the receive part of a cellular-system transceiver, by which to compensate for interference included in a receive signal received at the receiving station.

Through operation of an embodiment of the present invention, an input noise whitening filter assembly is provided to facilitate information recovery at the receiving station.

Through further operation of an embodiment of the present invention, a manner is provided by which to operate the adaptive, input noise whitening filter (INWF) of the receiving station.

In one aspect of the present invention, the adaptive, input noise whitening filter is caused to be operated when interference forms a significant part of the receive signal. And, the filter is caused not to be powered, or otherwise not to inject whitening noise when the level of adjacent-channel or co-channel interference is relatively low.

In another aspect of the present invention, a receive sequence is detected at a receiving station. A noise estimator estimates the noise component of the receive sequence. The noise component estimate is formed, e.g., utilizing a channel impulse response and a known training sequence.

In another aspect of the present invention, an autocorrelation estimate is formed of the estimated noise component. A high estimate of autocorrelation is indicative of a significant noise component of the receive signal. And, conversely, an estimate of autocorrelation that is of a low value is indicative of a receive signal having a small, or negligible, noise component.

In another aspect of the present invention, an autocorrelation estimate is provided to a filter characteristic selector. The filter characteristic selector compares the autocorrelation estimate with a threshold value. Responsive to the comparison, selection is made as to the filter characteristics to be exhibited by a filter positioned in-line to receive a representative of the receive sequence. The filter characteristic selector selects filter characteristics to be exhibited by a filter if the autocorrelation estimate exceeds the threshold. Otherwise, no filter characteristics, i.e., a no-filtering characteristic, is selected by the filter characteristic selector.

Characteristics selected by the filter characteristic selector cause, for instance, the filter characteristic to be of a Linear Prediction Error Filter (LPF).

In another aspect of the present invention, an adaptive, input noise whitening filter is provided that selectably causes noise whitening or to be of characteristics that do not cause noise whitening of a receive sequence applied thereto. That is to say, the filter is adaptively of characteristics that whiten input interference plus noise and, alternately, not to whiten a receive sequence.

In another aspect of the present invention, the adaptive, input noise whitening filter that, when operated in a manner to exhibit other-than-unitary filtering characteristics, flattens the spectrum of a received sequence signal. When the received sequence signal does not exhibit a significant noise, either adjacent-channel or co-channel, component, whitening filter operation is not required to flatten the spectrum of the received sequence signal. And, the input noise whitening filter is not operative to provide the whitening filtering of the input signal.

In another aspect of the present invention, the receive chain of the receive part of a receiving station includes a receiver filter positioned in-line with an adaptive, input noise whitening filter, and the filters together are positioned in-line with an equalizer element. The use of the adaptive, input noise whitening filter permits the receiver filter to be of a wider-band width pass band than would otherwise be permitted. While the receiver filter passes greater amounts of adjacent-channel interference, if the interference is significant, the INWF is caused to be operable to whiten the signal, thereby to suppress the adjacent interference by whitening the input interference plus noise. Such operation facilitates equalizer operation by which to recover informational content of a received sequence received at the receive chain portion.

In these and other aspects, therefore, apparatus, and an associated method, is provided for a receive circuit that receives a receive sequence. A noise-component characteristic determiner is adapted to receive an indication of a noise component of the receive sequence. The noise component characteristic determiner is configured to determine a noise-component characteristic that is characteristic of the noise component. A filter characteristic selector is adapted to receive an indication of the noise-component characteristic determined by the noise-component characteristic determiner. The filter characteristic selector is configured to select a filter characteristic responsive to the noise-component characteristic.

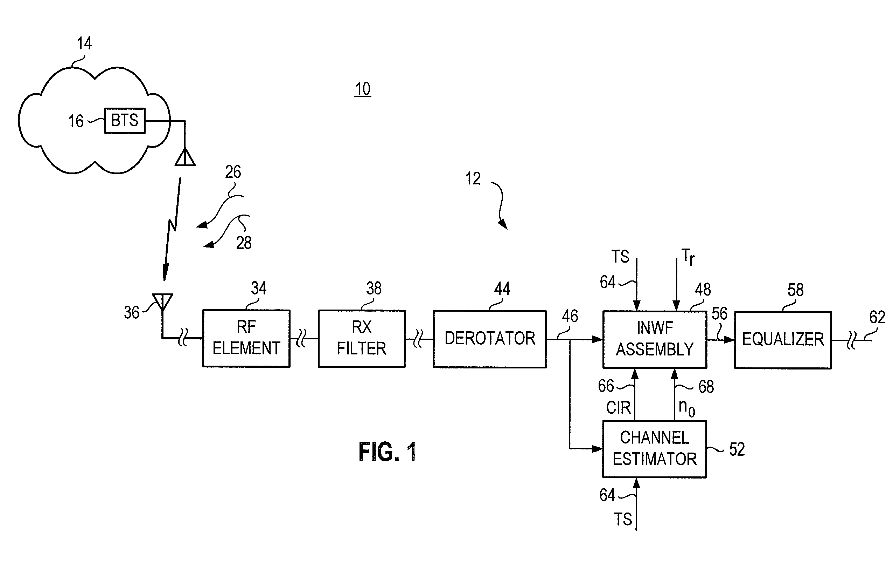

Referring first, therefore, to Figure 1, a radio communication system, shown generally at 10, provides for communications with mobile stations, such as the mobile station 12. In the exemplary implementation, the communication system forms a cellular communication system, a multi-access mobile radio communication system, having a network infrastructure including a plurality of spaced-apart space stations. Here, the network infrastructure is represented at 14, and a single base transceiver station (BTS) 16 is represented to be part of the network infrastructure. More generally, the communication system 10 is representative of any of various communication systems formed of a set of communications stations, here the stations 12 and 16, in which a communicated signal is susceptible to having distortion introduced thereon. Additionally, the following description of exemplary operation shall be described with respect to downlink communications, that is, communication of data from the base transceiver station to the mobile station 12. Description of operation of data communicated in the opposite, i.e., uplink, direction is analogous. Accordingly, the following description is merely exemplary. Embodiments of the present invention are analogously implementable in any of various radio, and other, communication systems.

The arrow 24 is representative of the communication of data, here a sequence of data symbols, by the base transceiver station to the mobile station 12. Arrows 26 and 28 are representative, respectively, of adjacent channel interference and co-channel interference introduced upon the data during its communication to the mobile station. The data sequence, when received at the mobile station, herein referred to, at times, as a receive sequence, includes component portions formed of the data sequence, the adjacent channel interference, and the co-channel interference. The adjacent-channel and co-channel interference form, collectively, the interference component. As noted previously, the interference component interferes with the recovery of the informational content of the communicated data sequence. Efforts are made to suppress, or compensate for, the interference included in the receive sequence.

The receive part, i.e., the receive chain, of the mobile station is shown in Figure 1. The receive part includes a RF (Radio Frequency) element 34 that operates upon indications of the receive sequence, once transduced into electrical form by the antenna 36. The RF element is further representative, e.g., of down conversion circuitry that down-converts radio-frequency energy to base band levels. The receive chain further includes a receiver filter 38, a wide-band, bandwidth filter that suppresses component portions of the received signal that are beyond the pass band of the filter. The filter, while shown as a single element, is formed of, e.g., a combination of analog and digital filters that together define the task band of the filter element 38.

Signal passed by the receiver filter 38, here including I/Q samples on the line 42, are provided to a derotation element 44. Derotation operations are performed by the derotator, and derotated values, x(n), are generated on the line 46. The line 46 extends to an adaptive input noise whitening filter, INWF assembly 48 of an embodiment of the present invention and to a channel estimator 52.

In general, the INWF assembly operates selectably, depending upon the interference component of the receive sequence, to add whitening noise to the signal applied thereto. Operation of the INWF shall be described in greater detail below. And, a filter output signal is generated on the line 56 that extends to an equalizer, such as a GMSK (Gaussian Minimum Shift Keying) equalizer, 58. Soft decisions of symbol values are made by the equalizer. Values representative of the decided values are generated on the line 62 and provided to other receive chain elements (not shown).

The channel estimator 52 forms a channel estimate, a channel impulse response (CIR) responsive to the input values provided on the line 46 and also training sequence (TS) provided on the line 64. A channel impulse response value and a timing offset value, $n_0$, are provided to the INWF assembly, here represented by way of the lines 66 and 68, respectively.

In operation, the INWF assembly is operable to provide signal whitening that acts to suppress adjacent channel interference by whitening the input interference and noise. The whitening is provided only when the received sequence is of characteristics that such addition is helpful. When there are low levels of interference, the INWF is caused not to provide whitening, such as being switched-off or turned-off, thereby acting as a unitary filter that passes all components of the signal applied to the filter.

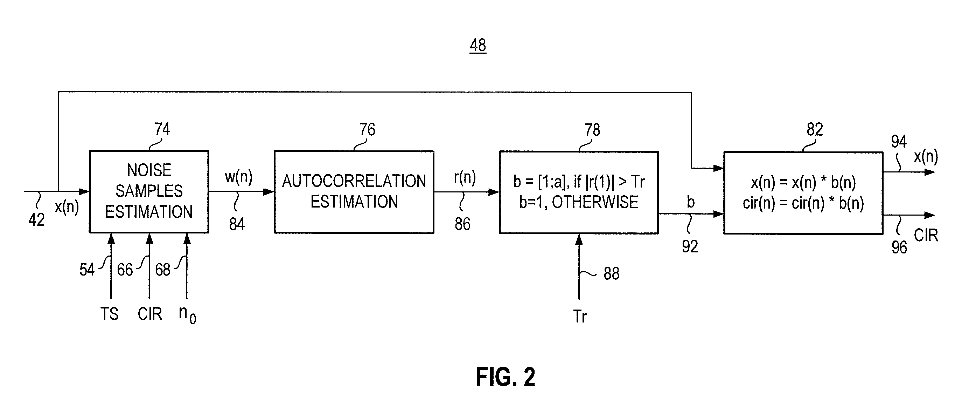

Figure 2 illustrates the INWF assembly 48 that forms part of the receive part of the mobile station 12 shown in Figure 1. The sampled values x(n) are again shown to be provided to the assembly on the line 42. The assembly is here shown to include a noise sample estimation element 74, an autocorrelation estimation element 76, a filter characteristic selector 78, and a filter element 82. The elements of the INWF assembly are functionally represented, implementable in any desired manner, such as, e.g., by algorithms executable by processing circuitry.

The noise sample estimation element 74 also receives indications of the training sequence, the channel impulse response and timing offset, here by way of the lines 54, 66, and 68 respectively. The noise sample estimation operator forms a noise estimate, w(n) of the received sequence. The noise estimate is provided, here by way of the line 84, to the autocorrelation estimation element 76. Autocorrelations are performed by the element 76, and a value of the autocorrelation estimate, r(n) is provided, here represented by way of the line 86, to the filter characteristic selector 78. In one implementation, the autocorrelation is estimated as the absolute value of a sample, r(1).

The filter characteristic selector 78 operates to select the characteristics of an INWF, here the filter element 82. The filter characteristic is selected responsive to comparison of the autocorrelation estimate with a threshold value, here provided by way of the line 88. The filter characteristic that is selected is dependent upon a determination of whether the autocorrelation estimate is greater than, or not greater than, the threshold value.

If the autocorrelation estimate is less than the threshold value, indicative of low levels of interference in the receive sequence, then the filter characteristic selector selects the filter characteristics such that whitening noise is not added, i.e., b=1. If, conversely, the autocorrelation estimate is greater than the threshold, then the filter characteristic selection made by the selector is for the filter element to be operable to inject white noise into the received sequence. That is to say, b=[1;a]. The value of b is provided here by way of the line 92, to the filter element 82, and the filter is operated in a manner in accordance therewith. The filter element is also coupled to receive the receive sequence on the line 42 form an output sequence on the line 94, together with a channel impulse response (CIR) estimate on the line 96.

Mathematical representations of the elements 74-82 of the INWF are as follows. After the channel response is estimated over the training sequence, the noise samples can be estimated by subtracting the re-modulated training sequence from the received signal, that is,

$$w(n) = x(n_0 + n) - \sum_{k=0}^{L-1} h(k)s(L - 1 + n - k) .$$ (1)

Where $w(n)$ is the noise sample estimation, $x(n)$ is the received sample, $h(k)$ is the channel impulse response (CIR) estimation and $s(k)$ is the known training sequence (TS). $n_0$ is timing offset of the received samples of the TS part. $L$ is length of the CIR. $0 \leq n \leq P\text{-}L$ and $P$ is the length of the TS. The noise samples can be whitened by a linear prediction error filter (LPF) whose coefficients are $\mathbf{b}$ = [1;$\mathbf{a}$] and $\mathbf{a}$ is the solution the normal equation:

$$\mathbf{\Gamma a} = -\mathbf{\gamma}$$ (2)

Where

$$\mathbf{\Gamma} = \begin{bmatrix} r(0) & r^*(1) & \cdots & r^*(M-1) \\ r(1) & r(0) & \cdots & r^*(M-2) \\ \vdots & \vdots & \ddots & \vdots \\ r(M-1) & r(M-2) & \cdots & r(0) \end{bmatrix}$$ (3)

$$\mathbf{\gamma} = \begin{bmatrix} r(1), r(2), \cdots r(M) \end{bmatrix}^T$$ (4)

$M$ is the order of the LPF and $r(m)$ is the estimation of the autocorrelation of the noise samples

$$r(m) = \frac{1}{P - L + 1} \sum_{k=m}^{P-L} w^*(k - m)w(k) .$$ (5)

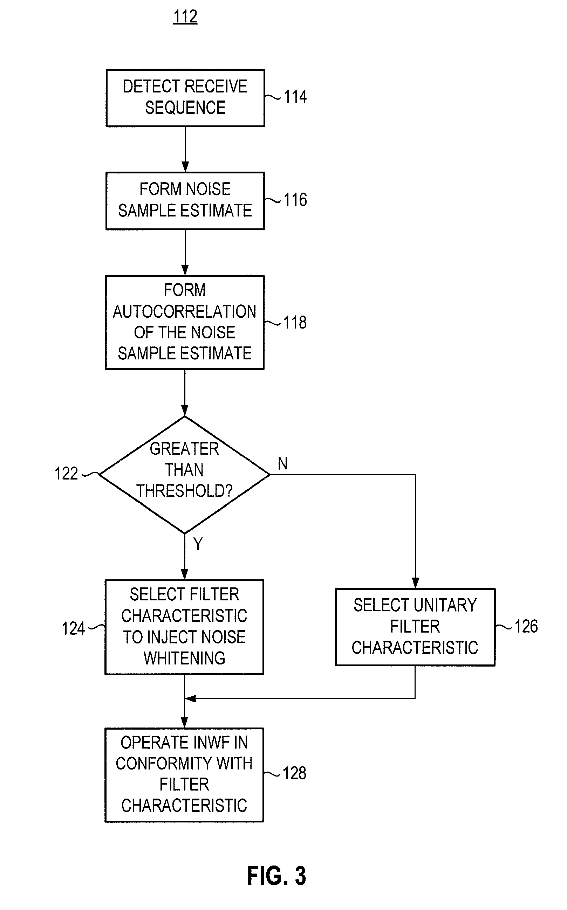

Figure 3 illustrates a process, shown generally at 112, representative of the process of operation of an embodiment of the present invention. First, and as indicated by the block 114, a receive sequence is detected at a receiving station. Then, and as indicated by the block 116, a noise sample estimate is formed. The noise sample is indicative of the noise component of the received sequence. Then, and as indicated by the block 118, an autocorrelation estimate is formed of the noise sample estimate. A determination is made, indicated by the decision block 122, as to whether the estimated autocorrelation exceeds a threshold. If so, the yes branch is taken to the block 124, and a filter characteristic of an INWF is selected to interject white noise into the receive sequence. If, conversely, the estimated autocorrelation level is less than the threshold, the no branch is taken to the block 126, and the filter characteristic is selected to be of a unitary value, i.e., b=1. Paths are taken from the blocks 124 and 126 to the block 128, and the INWF is caused to be operated in accordance with the selected filter characteristics.

The filter characteristics are selected in a manner best to facilitate recovery of the informational content of the receive sequence. When the receive sequence includes significant interfering components, then the filter is caused to interject white noise. Otherwise, the filter is caused not to be operable, i.e., to exhibit a unitary filter response. The adaptive, input noise whitening filter is used in conjunction with a wide-band, pass band receiver filter, best to provide an equalizer with the received sequence components to form equalization operations thereon.

**Claims**

1. Apparatus for a receive circuit that receives a receive sequence, said apparatus comprising:

   a noise-component characteristic determiner adapted to receive an indication of a noise component of the receive sequence, said noise component characteristic determiner configured to determine a noise-component characteristic that is characteristic of the noise component; and
   a filter characteristic selector adapted to receive an indication of the noise-component characteristic determined by said noise-component characteristic determiner, said filter characteristic selector configured to select a filter characteristic responsive to the noise-component characteristic.

2. The apparatus of claim 1 wherein further comprising a noise sample estimator configured to estimate the noise component of the receive sequence, the indication of the noise component that said noise-component characteristic determiner is adapted to receive comprising the estimate of the noise component formed by said noise sample estimator.

3. The apparatus of claim 2 wherein said noise component estimator is further configured to determine a channel impulse response of a channel upon which the receive sequence is communicated, and wherein estimation of the noise component utilizes the channel impulse response.

4. The apparatus of claim 1 wherein the noise-component characteristic determined by said noise-component characteristic determiner comprises an autocorrelation estimate of the noise component.

5. The apparatus of claim 4 wherein the autocorrelation estimate determined by said noise-component characteristic determiner comprises an absolute value of a first autocorrelation function calculation.

6. The apparatus of claim 4 wherein said noise-component characteristic determiner is further adapted to receive a training sequence, and wherein the autocorrelation estimate is formed using the training sequence.

7. The apparatus of claim 1 further comprising a filter adapted to receive a representation of the receive sequence and an indication of the filter characteristic selected by said filter characteristic selector, said filter configured to filter the receive sequence in conformity with the filter characteristic selected by said filter characteristic selector.

8. The apparatus of claim 7 wherein said filter comprises a linear prediction error filter.

9. The apparatus of claim 8 wherein the linear prediction error filter comprises a multi-tap filter.

10. The apparatus of claim 8 wherein the linear prediction error filter forming said filter is defined by filter coefficients and wherein the filter characteristic selected by said filter characteristic selector is determinative of the filter coefficients.

11. The apparatus of claim 8 wherein the filter characteristic selected by said filter characteristic selector is of a value causing said filter to exhibit non-unitary filtering when the noise-component characteristic of the receive sequence is beyond a selected level.

12. The apparatus of claim 11 wherein the filter characteristic selected by said filter characteristic selector is of a value causing said filter to exhibit unitary filtering when the noise component characteristic of the receive sequence is within a selected level.

13. The apparatus of claim 8 wherein said filter comprises an INWF, adaptive Input Noise Whitening Filter.

14. The method of claim 13 wherein said INWF is caused alternately to be powered or turned-off responsive to the filter characteristic selected by said filter characteristic selector.

15. A method for operating upon a receive sequence received at a receiving station, said method comprising the operations of:

   determining a noise-component characteristic that is characteristic of a noise component of the receive sequence;

selecting a filter characteristic responsive to the noise component characteristic; and

operating an adaptive input noise whitening filter responsive to the filter characteristic selected during said operation of detecting.

16. The method of claim 15 further comprising the initial operation of estimating the noise component of the receive sequence.

17. The method of claim 15 wherein said operation of selecting the filter characteristic comprises estimating an autocorrelation of the noise component of the receive sequence.

18. The method of claim 17 wherein said operation of selecting the filter characteristic comprises selecting the filter characteristic of a noise whitener when the autocorrelation estimating the autocorrelation is beyond a threshold.

19. The method of claim 17 wherein said operation of selecting the filter characteristic comprises selecting the filter characteristic to be free of noise whitening when the autocorrelation estimated during said operation of estimating the autocorrelation is within a threshold.

20. A method for operating an adaptive input noise whitening filter of a receiving station that receives a receive sequence, said method comprising the operations of:

powering the adaptive input noise whitening filter to cause operation thereof to inject noise whitening when a noise-component of the receive sequence is of first characteristics; and otherwise

causing the adaptive input noise whitening filter to pass the receive sequence free of noise whitening, when the noise-component of the receive sequence is of other-than-first characteristics.

**Amended claims in accordance with Rule 137(2) EPC.**

**1.** Apparatus for a receive circuit that receives a receive sequence x(n) having noise, said apparatus comprising:

a noise autocorrelation estimator (76) adapted to: receive an estimated value w(n) of the noise present in the receive sequence x(n), and to perform an autocorrelation of the estimated value w(n) to create an autocorrelation estimate; and,

a filter-characteristic selector (78) adapted to: receive from the determiner (76) the autocorrelation estimate, to compare the autocorrelation estimate to a threshold autocorrelation value, and to select a filter characteristic in response to the comparison, wherein the filter-characteristic selector (78) is adapted to select a unitary-filter characteristic upon a determination that the autocorrelation estimate is below the threshold value.

**2.** The apparatus of claim 1, further comprising a noise sample estimator (74) configured to estimate the noise present in the receive sequence x(n).

**3.** The apparatus of claim 2, wherein said noise sample estimator (74) is further configured to receive a channel impulse response "CIR" of a channel upon which the receive sequence is communicated, and wherein estimation of the noise utilizes the channel impulse response.

**4.** The apparatus of claim 1, wherein the autocorrelation estimate determined by said noise autocorrelation estimator (76) comprises an absolute value of a first autocorrelation function calculation.

**5.** The apparatus of claim 1, wherein said noise autocorrelation estimator (76) is further adapted to receive a training sequence "TS", and wherein the autocorrelation estimate is formed using the training sequence.

**6.** The apparatus of claim 1, further comprising a filter (82) adapted to receive a representation of the receive sequence x(n) and an indication of the filter characteristic selected by said filter-characteristic selector (78), said filter (82) configured to filter the receive sequence in conformity with the filter characteristic selected by said filter characteristic selector (78).

**7.** The apparatus of claim 6, wherein said filter (82) comprises a linear prediction error filter.

**8.** The apparatus of claim 7, wherein the linear prediction error filter comprises a multi-tap filter.

**9.** The apparatus of claim 7, wherein the linear prediction error filter forming said filter (82) is defined by filter coefficients, and wherein the filter characteristic selected by said filter characteristic selector (78) is determinative of the filter coefficients.

**10.** The apparatus of claim 7, wherein the filter characteristic selected by said filter-characteristic selector (78) is of a value causing said filter to exhibit non-unitary filtering when the noise present in the receive sequence is beyond a selected level.

**11.** The apparatus of claim 7, wherein said filter (82) comprises an adaptive Input Noise Whitening Filter "INWF".

**12.** The apparatus of claim 6, wherein the filter (82) is further adapted to receive a representation of a channel impulse response of the receive sequence, said filter configured to filter the channel impulse response in conformity with the filter characteristic selected by said filter characteristic selector (78).

**13.** A method for operating upon a receive sequence x(n) received at a receiving station (12), the receive sequence having noise, said method comprising the operations of:

receiving an estimated value w(n) of the noise present in the receive sequence x(n);
performing an autocorrelation of the estimated value w(n) to create an autocorrelation estimate;
comparing the autocorrelation estimate to a threshold autocorrelation value; and,
selecting a filter characteristic in response to the comparison, a unitary-filter characteristic being selected upon a determination that the autocorrelation estimate is below the threshold value.

**14.** The method of claim 13, further comprising the initial operation of estimating the noise present in the receive sequence x(n).

**15.** The method of claim 13, wherein said operation of selecting the filter characteristic comprises selecting the filter characteristic of a noise whitener when the autocorrelation estimate is beyond the threshold value.

**16.** The method of claim 13, further comprising receiving a representation of a channel impulse response "CIR" of the receive sequence x(n) in an adaptive Input Noise Whitening Filter "INWF" (82), and filtering the representation of the channel impulse response "CIR" in conformity with the selected filter characteristic.

**FIG. 1**

EP 1 956 718 A1

48

74

NOISE SAMPLES ESTIMATION

76

AUTOCORRELATION ESTIMATION

78

b = [1;a], if |r(1)| > Tr
b=1, OTHERWISE

82

x(n) = x(n) * b(n)
cir(n) = cir(n) * b(n)

42 x(n)

w(n)

84

r(n)

86

b

92

94 x(n)

96 CIR

54 66 68

TS   CIR   $n_0$

88

Tr

**FIG. 2**

<u>112</u>

```
┌─────────────────────┐
│   DETECT RECEIVE    │∿114
│      SEQUENCE       │
└─────────────────────┘
           │
           ▼
┌─────────────────────┐
│     FORM NOISE      │∿116
│  SAMPLE ESTIMATE    │
└─────────────────────┘
           │
           ▼
┌─────────────────────┐
│        FORM         │
│   AUTOCORRELATION   │∿118
│   OF THE NOISE      │
│  SAMPLE ESTIMATE    │
└─────────────────────┘
           │
           ▼
       ╱╲
      ╱  ╲
     ╱ GREATER ╲        N
122∿╱   THAN    ╲──────────────┐
    ╲ THRESHOLD? ╱             │
     ╲         ╱               │
      ╲  ╱│╲  ╱                │
           │ Y                 │
           ▼                   ▼
┌─────────────────────┐  ┌─────────────────────┐
│   SELECT FILTER     │  │  SELECT UNITARY     │
│  CHARACTERISTIC     │  │     FILTER          │∿126
│124∿ TO INJECT NOISE │  │  CHARACTERISTIC     │
│     WHITENING       │  └─────────────────────┘
└─────────────────────┘             │
           │                        │
           ▼◄───────────────────────┘
┌─────────────────────┐
│  OPERATE INWF IN    │
│  CONFORMITY WITH    │∿128
│      FILTER         │
│  CHARACTERISTIC     │
└─────────────────────┘
```

**FIG. 3**

EP 1 956 718 A1

**European Patent Office**

**EUROPEAN SEARCH REPORT**

Application Number

EP 07 10 2086

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/250466 A1 (VARMA GOTTIMUKKALA N [IN] ET AL) 10 November 2005 (2005-11-10) * paragraphs [0023], [0024], [0027], [0030] - [0033] * * figures 4,5 * | 1-20 | INV. H04B1/10 H04L25/03 H04L1/00 |
| X | US 2004/266383 A1 (MATTELLINI GIAN PAOLO [FI] ET AL) 30 December 2004 (2004-12-30) * paragraphs [0027], [0054], [0059] * | 1-20 | |
| X | FR 2 873 877 A1 (WAVECOM SA [FR]) 3 February 2006 (2006-02-03) * page 6 * | 1-20 | |
| X | WO 2005/048548 A (ANALOG DEVICES INC [US]; KOCIC MARKO [US]; MARTINOT LIDWINE [FR]; ZVON) 26 May 2005 (2005-05-26) * page 5, line 32 - page 7, line 21 * | 1-20 | |
| X | US 2005/079826 A1 (HE SHOUSHENG [SE]) 14 April 2005 (2005-04-14) * paragraphs [0023], [0024], [0026] * | 1-20 | TECHNICAL FIELDS SEARCHED (IPC) H04B H04L |
| X | WO 01/39448 A (ERICSSON INC [US]) 31 May 2001 (2001-05-31) * the whole document * | 1-10,13, 15-17 | |
| A | US 2004/022335 A1 (ARSLAN HUSEYIN [US] ET AL) 5 February 2004 (2004-02-05) * paragraphs [0054], [0057], [0068] * | 1-20 | |
| A | US 2004/233886 A1 (DIETERICH HANS [DE] ET AL) 25 November 2004 (2004-11-25) * the whole document * | 1-20 | |

The present search report has been drawn up for all claims

| Place of search | Date of completion of the search | Examiner |
|---|---|---|
| Munich | 27 June 2007 | Belloni, Paolo |

**ANNEX TO THE EUROPEAN SEARCH REPORT
ON EUROPEAN PATENT APPLICATION NO.**                    EP 07 10 2086

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2007

| Patent document cited in search report | | Publication date | Patent family member(s) | | Publication date |
|---|---|---|---|---|---|
| US 2005250466 | A1 | 10-11-2005 | WO | 2005107084 A2 | 10-11-2005 |
| US 2004266383 | A1 | 30-12-2004 | BR | PI0411605 A | 08-08-2006 |
| | | | CA | 2530622 A1 | 06-01-2005 |
| | | | CN | 1813414 A | 02-08-2006 |
| | | | EP | 1639719 A2 | 29-03-2006 |
| | | | WO | 2005002241 A2 | 06-01-2005 |
| | | | KR | 20060025572 A | 21-03-2006 |
| | | | TW | 246263 B | 21-12-2005 |
| FR 2873877 | A1 | 03-02-2006 | EP | 1774660 A1 | 18-04-2007 |
| | | | WO | 2006024712 A1 | 09-03-2006 |
| WO 2005048548 | A | 26-05-2005 | NONE | | |
| US 2005079826 | A1 | 14-04-2005 | CN | 1868185 A | 22-11-2006 |
| | | | EP | 1673911 A1 | 28-06-2006 |
| | | | WO | 2005041510 A1 | 06-05-2005 |
| | | | JP | 2007508757 T | 05-04-2007 |
| WO 0139448 | A | 31-05-2001 | AT | 310352 T | 15-12-2005 |
| | | | AU | 7733300 A | 04-06-2001 |
| | | | CN | 1399835 A | 26-02-2003 |
| | | | DE | 60024127 D1 | 22-12-2005 |
| | | | DE | 60024127 T2 | 06-07-2006 |
| | | | EP | 1232617 A1 | 21-08-2002 |
| | | | JP | 2003515972 T | 07-05-2003 |
| | | | US | 6590932 B1 | 08-07-2003 |
| US 2004022335 | A1 | 05-02-2004 | AU | 2003248892 A1 | 23-02-2004 |
| | | | CN | 1685680 A | 19-10-2005 |
| | | | EP | 1532786 A1 | 25-05-2005 |
| | | | JP | 2005535225 T | 17-11-2005 |
| | | | KR | 20050073441 A | 13-07-2005 |
| | | | WO | 2004014031 A1 | 12-02-2004 |
| US 2004233886 | A1 | 25-11-2004 | CN | 1545767 A | 10-11-2004 |
| | | | WO | 03019802 A1 | 06-03-2003 |

EPO FORM P0459

For more details about this annex : see Official Journal of the European Patent Office, No. 12/82